(19) Europäisches Patentamt
European Patent Office
Office européen des brevets

(11) **EP 2 860 905 A1**

(12) **EUROPEAN PATENT APPLICATION**

(43) Date of publication:
**15.04.2015 Bulletin 2015/16**

(51) Int Cl.:
***H04L 9/00*** *(2006.01)*

(21) Application number: **13306397.4**

(22) Date of filing: **09.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
**35576 Cesson-Sévigné (FR)**
• **Libert, Benoit**
**35576 Cesson-Sévigné (FR)**

(74) Representative: **Perrot, Sébastien**
**Technicolor R&D France Snc**
**975, avenue des Champs Blancs**
**CS 17616**
**35576 Cesson-Sévigné Cedex (FR)**

(54) **Method for ciphering a message via a keyed homomorphic encryption function, corresponding electronic device and computer program product**

(57)     In one embodiment, it is proposed a method for ciphering a message by a sender device at destination to a receiver device, said method comprising a step of using a keyed homomorphic encryption function associated with a public key of said receiver device. Such step is remarkable in that it comprises :
- a step of ciphering said message with an encryption scheme secure against adaptive chosen-ciphertext attacks, in function of a first element of said public key, delivering a ciphertext;
- a step of determining for said ciphertext, an homomorphic non-interactive proof and a simulation-sound non-interactive proof, said homomorphic non-interactive proof being obtained in function of a set of signatures comprised in said public key, and said simulation-sound non-interactive proof being obtained in function of a second element comprised in said public key, and an evaluation key of said keyed homomorphic encryption function being an element linked to said second element;
- a step of delivering a cipher of said message comprising said ciphertext, said homomorphic non-interactive proof and said simulation-sound non-interactive proof.

FIG.1

**Description**

Field of the invention

The invention relates to cryptography, and more specifically to homomorphic encryption schemes.

Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In homomorphic encryption schemes (either partially or fully encryption schemes), it is possible to publicly operate on a ciphertext and turn it into an encryption of a related message without knowing the decryption key. Such feature is called the malleability of homomorphic encryption scheme. Due to this malleability feature, the notion of security under adaptive chosen ciphertext attack (also named CCA2 security) and homomorphic encryption scheme were contradictory. Indeed, no one can obtain a homomorphic encryption scheme with a CCA2 security proof (see for example the following article: "On CCA-Secure Somewhat Homomorphic Encryption" by J. Loftus et al. in the conference SAC ("Selected Areas in Cryptography") 2012, for more details on that issue). However, in the article "Chosen Ciphertext Secure Keyed-Homomorphic Public-Key Encryption" by Emura et al., published in the proceedings of the conference PKC 2013 (of which the full version is available on the Cryptology ePrint Archive (Report 2013/390)), the authors proposed a technique that limit such malleability only to a user that owns a dedicated key (which is named an *evaluation key*), different from the decryption key in the homomorphic encryption scheme. Such "keyed" homomorphic encryption scheme can be proven CCA2 secure against any adversary who does not have the evaluation key). Also, another mandatory condition on such scheme is that the evaluation key does not enable decryption by itself. But, as acknowledged in the full version of the article of Emura et al., their constructions only satisfy a relaxed security definition wherein the adversary is not allowed to obtain homomorphic evaluations of the challenge ciphertext. However, there is no reason to impose this restriction as long as the resulting homomorphic evaluations are not queried for decryption. The present invention aims to overcome this issue. Moreover, it appears that many applications of homomorphic encryption schemes (like electronic voting or multiparty computation protocols) require a threshold decryption mechanism in any large-scale deployment: the decryption key must be shared among *n* servers in such a way that at least t out of these n servers have to contribute to each decryption operation. Unfortunately, the Emura et al. constructions disclosed in the previously mentioned article do not readily extend to the threshold setting because they do not provide ciphertexts of publicly verifiable validity. Indeed, in such scheme, deciding whether a ciphertext is valid or not requires knowledge of the decryption key. The aim of the present invention is to overcome this issue. Indeed, the present invention is a chosen-ciphertext-secure keyed-homomorphic cryptosystem with publicly verifiable ciphertexts. As a result, it is possible to set up a threshold decryption scheme that can be proven and remains chosen-ciphertext-secure under adaptive corruptions.

Summary of the invention

The present invention is directed to a method for ciphering a message by a sender device at destination to a receiver device, said method comprising a step of using a keyed homomorphic encryption function associated with a public key of said receiver device. Such step is remarkable in that it comprises :

- a step of ciphering said message with an encryption scheme secure against adaptive chosen-ciphertext attacks, in function of a first element of said public key, delivering a ciphertext;
- a step of determining for said ciphertext, an homomorphic non-interactive proof and a simulation-sound non-interactive proof, said homomorphic non-interactive proof being obtained in function of a set of signatures comprised in said public key, and said simulation-sound non-interactive proof being obtained in function of a second element comprised in said public key, and an evaluation key of said keyed homomorphic encryption function being an element linked to said second element;
- a step of delivering a cipher of said message comprising said ciphertext, said homomorphic non-interactive proof and said simulation-sound non-interactive proof.

Hence, the ciphertext obtained tough the execution of such method is publicly verifiable. Such technique can be applied either in cloud services, or in data mining where keyed-homomorphic cryptosystem are needed. More usage scenarios where homomorphic cryptosystem (and therefore keyed-homomorphic cryptosystem) are described in the document entitled: "KV Web Security: Applications of Homomorphic Encryption" by Gerhard Pötzelsberger.

In a preferred embodiment, such method for ciphering is remarkable in that said cipher of said message further comprises a one-time verification public key SVK and a one-time signature corresponding to a signature of a concatenation of said ciphertext, said homomorphic non-interactive proof and said simulation-sound non-interactive proof, said signature being verifiable with said verification public key SVK.

In a preferred embodiment, such method for ciphering is remarkable in that said encryption scheme is based on the Naor-Yung encryption paradigm.

In a preferred embodiment, such method for ciphering is remarkable in that said encryption scheme is based on the Cramer-Shoup paradigm.

In a preferred embodiment, such method for ciphering is remarkable in that said ciphertext corresponds to an uplet $\left(C_0, C_1, C_2, C_3\right) = \left(M \cdot X_1^{\theta_1} \cdot X_2^{\theta_2}, f^{\theta_1}, h^{\theta_2}, g^{\theta_1+\theta_2}\right)$ where M is said message and belongs to a group $\mathbb{G}$, encryption exponents $\theta_1, \theta_2$ that belong to group $\mathbb{Z}_p$ are private random values, and elements $X_1 = f^{x_1} g^{x_0} \in \mathbb{G}$ and $X_2 = h^{x_2} g^{x_0} \in \mathbb{G}$ are comprised in said public key, with $(x_0, x_1, x_2) \in \mathbb{Z}_p^3$ being unknown elements for said sender device and corresponding to a private key for said receiver device, and elements *g, f, h* are elements that belong to said group $\mathbb{G}$.

In a preferred embodiment, such method for ciphering is remarkable in that said step of determining said homomorphic non-interactive proof comprises:

- a step of obtaining said set of signatures which is a signature on independent vectors $\vec{f}$ = (f,1,g) $\in \mathbb{G}^3$ and $\vec{h}$ = (1,h,g) $\in \mathbb{G}^3$ comprising elements $\left\{\left(a_j, b, c_j\right)\right\}_{j=1}^2$ obtained through a use of a private key $sk' = \{\chi_i, \gamma_i, \delta_i\}_{i=1}^3$, with $(\chi_i, \gamma_i, \delta_i) \in \mathbb{Z}_p^3$, and $(a_1, b_1, c_1) = (f^{-\chi_1} g^{-\chi_3}, f^{-\gamma_1} g^{-\gamma_3}, f^{-\delta_1} g^{-\delta_3})$, $(a_2, b_2, c_2) = (h^{-\chi_2} g^{-\chi_3}, h^{-\gamma_2} g^{-\gamma_3}, h^{-\delta_2} g^{-\delta_3})$, and public key associated to said private key *sk'* being comprised in said public key of said receiver device;

- a step of deriving a linearly homomorphic signature from said set of signatures and said encryption exponents $\theta_1, \theta_2$, delivering a derived signature $(a, b, c) = \left(a_1^{\theta_1} \cdot a_2^{\theta_2}, b = b_1^{\theta_1} \cdot b_2^{\theta_2}, c = c_1^{\theta_1} \cdot c_2^{\theta_2}\right)$ on the vector $(C_1, C_2, C_3)$, said derived signature being said homomorphic non-interactive proof.

In a preferred embodiment, such method for ciphering is remarkable in that said step of determining said simulation-sound non-interactive proof comprises:

- a step of obtaining said second element corresponding to a one time homomorphic signature on the independent vectors $\vec{f}$ = (f,1,g) $\in \mathbb{G}^3$ and $\vec{h}$ = (1,h,g) $\in \mathbb{G}^3$ generated with a private key, said evaluation key corresponding to said private key;

- a step of determining a derived signature on said second element, said derived signature being a one-time linearly homomorphic signature ;

- a step of generating commitments on said derived signature using a Groth-Sahai common reference string based on said one-time verification public key VK;

- a step of generating proofs with a randomizable linearly homomorphic structure-preserving signing method, said simulation-sound non-interactive proof being a concatenation of said commitments and said proofs.

In a preferred embodiment, such method for ciphering is remarkable in that said step of determining said simulation-sound non-interactive proof comprises a step of determining a non-interactive witness OR proof in function of said encryption exponents $\theta_1, \theta_2$ and said second element, said second element being a verification key of a digital signature method, and said evaluation key being a corresponding private key of said verification key of said digital signature method.

In a preferred embodiment, such method for ciphering is remarkable in that said digital signature method is a Waters signature method.

In another embodiment, it is proposed a method for processing a cipher of a message, said method being executed by a receiver device. Such method is remarkable in that it comprises:

- a step of obtaining a homomorphic non-interactive proof and a simulation-sound non-interactive proof that are associated to said cipher;
- a step of verifying a validity of said homomorphic non-interactive proof and said simulation-sound non-interactive proof , delivering an information of validity of said cipher.

In a preferred embodiment, such method for processing is remarkable in that said method further comprises a step of obtaining said message from said cipher in case that said information of validity asserts that said cipher is valid, by using a private key.

In a preferred embodiment, such method for processing is remarkable in that when at least a first and a second cipher of a first message and a second message are obtained by said receiver device, the method further comprises a set of combining said first and said second cipher by using an evaluation key, delivering a third cipher comprising an homomorphic non-interactive proof and a simulation-sound non-interactive proof.

According to an exemplary implementation, the different steps of the method are implemented by a computer software program or programs, this software program comprising software instructions designed to be executed by a data processor of an electronic device (or module or a computer device) according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory")* or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more subprograms of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

In another embodiment, it is proposed a sender device comprising means for ciphering a message, said means comprising means for using a keyed homomorphic encryption function associated with a public key of a receiver device. These means for using are remarkable in that they comprise:

- means for ciphering said message with an encryption scheme secure against adaptive chosen-ciphertext attacks, in function of a first element of said public key, delivering a ciphertext;

- means for determining for said ciphertext, an homomorphic non-interactive proof and a simulation-sound non-interactive proof, said homomorphic non-interactive proof being obtained in function of a set of signatures comprised in said public key, and said simulation-sound non-interactive proof being obtained in function of a second element comprised in said public key, and an evaluation key of said keyed homomorphic encryption function being an element linked to said second element;
- means for delivering a cipher of said message comprising said ciphertext, said homomorphic non-interactive proof and said simulation-sound non-interactive proof.

In another embodiment, it is proposed a receiver device comprising means for processing a cipher of a message. These means are remarkable in that they comprise:

- means for obtaining a homomorphic non-interactive proof and a simulation-sound non-interactive proof that are associated to said cipher;
- means for verifying a validity of said homomorphic non-interactive proof and said simulation-sound non-interactive proof, delivering an information of validity of said cipher.

Brief description of the figures

The above and other aspects of the invention will become more apparent by the following detailed description of exemplary embodiments thereof with reference to the attached drawings in which:

Figure 1 presents the main functions that define a keyed homomorphic encryption scheme with publicly verifiable ciphertexts, according to one embodiment of the invention;

Figure 2 describes the main functions that define a $(t; n)$ threshold keyed homomorphic encryption scheme, according to an embodiment of the invention;

Figure 3 presents a device that can be used to perform one or several steps of methods disclosed in the present document.

Detailed description

At a high level, we take a general approach that can be outlined as follows. We combine the Cramer-Shoup paradigm (described in the article "Universal Hash Proofs and a Paradigm for Adaptive Chosen Ciphertext Secure Public-Key Encryption", by Ronald Cramer et al., and published in the proceedings of the conference Eurocrypt 2002) for constructing CCA2-secure encryption schemes with publicly verifiable simulation-sound proofs: simulation-soundness (see the article "Non-Malleable Non-Interactive Zero Knowledge and Adaptive Chosen-Ciphertext Security", by Amit Sahai, published in the proceedings of the conference FOCS'99) refers to the inability of an adversary to convincingly prove a false statement, even after having observed a polynomial number of proofs for possibly false statements of its choice. Specifically, the construction below uses a variant of the Cramer-Shoup cryptosystem based on the Decision Linear assumption (as depicted in the article "Short Group Signatures", by D. Boneh et al., published in the proceedings of the conference CRYPTO 2004), where ciphertexts are of the form

$$(C_0, C_1, C_2, C_3) = \left( M \cdot X_1^{\theta_1} \cdot X_2^{\theta_2}, f^{\theta_1}, h^{\theta_2}, g^{\theta_1 + \theta_2} \right).$$ This cryptosystem is combined with a technique suggested by Groth (in the article "Simulation-Sound NIZK Proofs for a Practical Language and Constant Size Group Signatures", by J. Groth, published in the proceedings of the conference Asiacrypt'06) for constructing efficient simulation-sound non-interactive proofs allowing to convince a verifier that $(C_1, C_2, C_3)$ are correctly formed.

In short, in order to prove a statement in a simulation-sound manner, Groth's technique consists in proving a disjunction of two statements: the prover generates a key pair (SVK,SSK) for a one time signature scheme before in proving that either the statement is true OR the prover knows a valid signature (generated w.r.t. to a public key $pk_W$ included in the common reference string, for which no one knows the private key) on the one-time verification key SVK. The one-time private key SSK is then used to create a one-time signature on the overall proof. The construction hereunder uses Waters signatures (described in the article "Efficient Identity-Based Encryption Without Random Oracles", by B. Waters, published in the proceedings of the conference Eurocrypt 20005) because its verification equation uses linear pairing product equations, which allows for a better efficiency when used in combination with non-interactive proof systems.

The key idea for building a keyed homomorphic cryptosystem from these techniques is to use the simulation-trapdoor of the simulation-sound proof system (which is the private key $sk_W$ associated with $pk_W$ in such scheme) as an evaluation key for the homomorphic cryptosystem. This will allow the homomorphic evaluation algorithm to simulate a convincing proof that its output ciphertext is correctly formed without knowing the underlying encryption exponents (which are used to generate a real non-interactive proof in the encryption algorithm). The novelty of the approach is thus to use the simulation trapdoor of the proof system in the real scheme, and not only in the security proof.

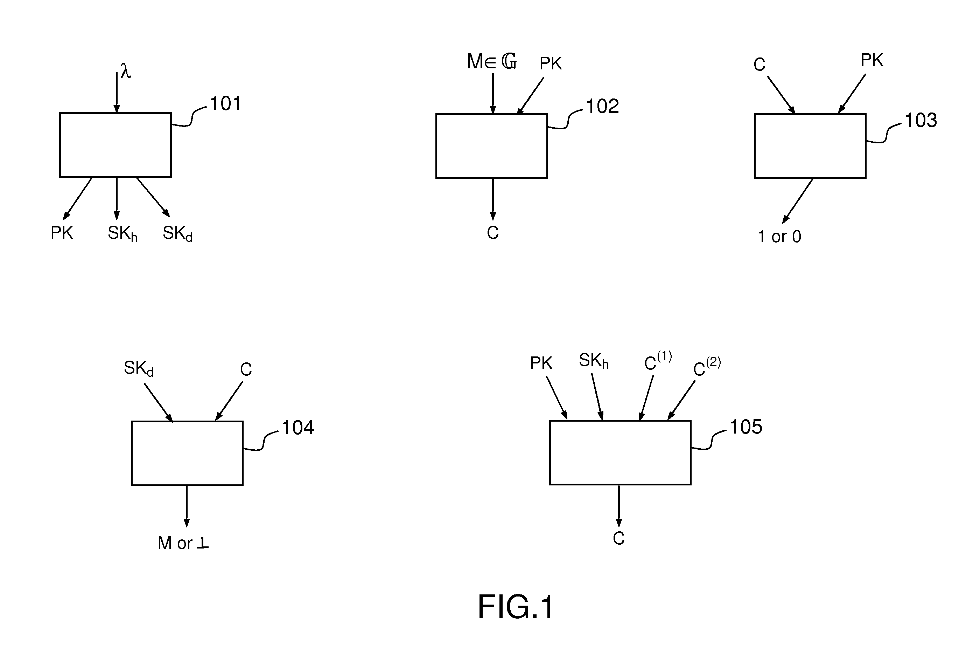

In order to make sure that the keyed homomorphic encryption scheme remains secure against non-adaptive chosen-ciphertext attacks (IND-CCA1) if the attacker obtains the evaluation key at the beginning of the attack, the ciphertext comprises a second non-interactive proof of ciphertext validity. In order to be processed by the homomorphic evaluation algorithm, this non-interactive proof must be homomorphic itself. One possibility would be to use Groth-Sahai proofs (see the article "Efficient Non-interactive Proof Systems for Bilinear Groups", by J. Groth et al. published in the proceedings of the conferenceEurocrypt'08) which are known to be homomorphic. Here, we obtain a better efficiency by using homomorphic proofs derived from linearly homomorphic structure-preserving signatures as described in the article "Linearly Homomorphic Structure-Preserving Signatures and their Applications", by B. Libert et al., published in the proceedings of the conference Crypto 2013). Figure 1 presents the main functions that define a keyed homomorphic encryption scheme with publicly verifiable ciphertexts, according to one embodiment of the invention.

The function **Keygen**$(\lambda)$, referenced 101, takes as input a security parameter $\lambda$, and outputs a public key, a private key and an evaluation key. Such function 101 comprises:

- a step of obtaining a bilinear groups $(\mathbb{G}, \mathbb{G}_T)$ of prime order $p > 2^\lambda$ and obtaining the followings elements

$$g, f, h \xleftarrow{R} \mathbb{G}, x_0, x_1, x_2 \xleftarrow{R} \mathbb{Z}_p \text{ (where the notation } s \xleftarrow{R} S \text{ means that the element } s \text{ is picked uniformly at}$$

random from a set $S$, and the notation $x, y, z \xleftarrow{R} S$ means that the elements $x,y,z$ are picked independently and uniformly at random from the set $S$) and determining $X_1 = f^{x_1} g^{x_0} \in \mathbb{G}, X_2 = h^{x_2} g^{x_0} \in \mathbb{G},$ which form a Cramer-Shoup public key;

- a step of initiating the vectors $\vec{f} = (f,1,g) \in \mathbb{G}^3$ and $\vec{h} = (1,h,g) \in \mathbb{G}^3$; R

- a step of obtaining the elements $f_1, f_2 \xleftarrow{R} \mathbb{G}$ and initiating the vectors

$$\vec{f_1} = (f_1, 1, g), \qquad \vec{f_2} = (1, f_2, g), \qquad \vec{f_3} = \vec{f_1}^{\phi_1} \cdot \vec{f_2}^{\phi_2} \cdot (1,1,g)^{-1}$$

where $\phi_1, \phi_2 \xleftarrow{R} \mathbb{Z}_p$ which will be used as a perfectly hiding Groth-Sahai CRS (for "Common Reference String")

for the generation of NIWI (for "Non-Interactive Wetness Indistinguishable") arguments;

- a step of obtaining a strongly unforgeable one-time signature $\Sigma = (\mathcal{G}, S, \mathcal{U})$ with verification keys consisting of L-bit strings, for some polynomially bounded L, and $\mathcal{G}$ corresponds to a key generation algorithm, $S$ corresponds to a signature algorithm and U corresponds to a verification algorithm;

a step of generating a key pair for the one-time linearly homomorphic structure preserving signature scheme (suggested in "Linearly Homomorphic Structure-Preserving Signatures and their Applications", by B. Libert et al., and published in the proceedings of the conference Crypto 2013) for vectors of dimension n = 3. Let $pk_{ot} =$

$(g_z, g_r, h_z, h_u, \{g_i \ h_i\}_{i=1}^3)$ be the public key, and let $sk_{ot} = (\{\chi_i, \gamma_i, \delta_i\}_{i=1}^3)$ be the corresponding private key;

- a step of signing the independent vectors $\vec{f} = (f,1,g) \in \mathbb{G}^3$ and $\vec{h} = (1,h,g) \in \mathbb{G}^3$ via the use of the private key $sk_{ot}$,

that delivers a one-time linearly homomorphic signature $\{(z_j, r_j, u_j)\}_{j=1}^2$ defined as follows:

$$(z_1, r_1, u_1) = (f^{-\chi_1} g^{-\chi_3}, f^{-\gamma_1} g^{-\gamma_3}, f^{-\delta_1} g^{-\delta_3}),$$

$$(z_2, r_2, u_2) = (h^{-\chi_2} g^{-\chi_3}, h^{-\gamma_2} g^{-\gamma_3}, h^{-\delta_2} g^{-\delta_3});$$

- a step of generating a private key $sk_W = Y^x$ and the corresponding public key $pk_W = (X = g^x, Y, \boldsymbol{w} = (w_0, ..., w_L))$ compliant with the Waters signature scheme. For any string $\tau = \tau[1] ... \tau[L] \in \{0,1\}^L$, we denote by

$$H_{\mathbb{G}}(\tau) = w_0 \cdot \prod_{i=1}^{L} w_i^{\tau[i]}$$ the corresponding hash value; As mentioned previously, another signature scheme can be used instead of the Waters signature scheme. However, for efficiency issues, the Waters signature scheme should be used due to the fact that: (i) Its security is proved under the Diffie-Hellman assumption which is already implied by the Decision Linear assumption (so, it does not introduce any extra assumption); (ii) Its verification equation is a linear pairing product equation, which gives a shorter OR proof in the final ciphertext;
- a step of outputting a public key which is defined as follows:

$$PK = (g, \vec{f}, \vec{h}, \vec{f}_1, \vec{f}_2, \vec{f}_3, X_1, X_2, \mathrm{pk}_{ot}, pk_W, \{(z_j, r_j, u_j)\}_{j=1}^{2});$$

- a step of outputting an evaluation key $SK_h = sk_W = Y^x$, and a decryption key $SK_d = (x_0, x_1, x_2)$.

The function Encrypt(M, PK), referenced 102, takes as input a message $M \in \mathbb{G}$ and the public key PK (corresponding to the output of the function 101). It outputs a ciphertext that is publicly verifiable.

In order to encrypt a message $M \in \mathbb{G}$, the function 102 comprises the following steps that must be executed by a device:

- a step of generating a one-time signature key pair $(SVK, SSK) \leftarrow \mathcal{G}(\lambda)$;

- a step of choosing elements $\theta_1, \theta_2 \overset{R}{\leftarrow} \mathbb{Z}_p$ ; ;

- step of determining the following elements based on the elements $\theta_1, \theta_2$ and elements comprised in the public key $PK$:

$$C_0 = M \cdot X_1^{\theta_1} \cdot X_2^{\theta_2}, C_1 = f^{\theta_1}, C_2 = h^{\theta_2}, C_3 = g^{\theta_1 + \theta_2};$$

- step of determining a derived one time linearly homomorphic signature (z,r,u) on the vectors $(C_1, C_2, C_3) \in \mathbb{G}^3$.

More precisely, such step does not explicitly use the vectors $(C_1, C_2, C_3) \in \mathbb{G}^3$, but uses the elements $\theta_1, \theta_2 \in \mathbb{Z}_p$, as encryption exponents in the following equations:

$$z = z_1^{\theta_1} \cdot z_2^{\theta_2} ; \quad r = r_1^{\theta_1} \cdot r_2^{\theta_2} ; \quad u = u_1^{\theta_1} \cdot u_2^{\theta_2};$$

R

- a step of choosing $\sigma_0, \sigma_1 \xleftarrow{R} \mathbb{G}$ at random

- a step of generating perfectly hiding commitments using the vectors $\vec{f} = (\vec{f_1}, \vec{f_2}, \vec{f_3})$, as a Groth Sahai CRS, such step comprising the generation of commitments $\vec{C}_{\sigma_0}, \overline{C}_{\Theta_1}, \overline{C}_{\Theta_2}$ to elements $\sigma_0$, $\Theta_1 = g^{\theta_1}$ and $\Theta_2 = g^{\theta_2}$, respectively;

- a step of determining a NIWI argument $\pi_{OR}$ that either the following equalities are satisfied

$$e(C_1, g) = e(f, \Theta_1)$$

$$e(C_2, g) = e(h, \Theta_2) \quad (*)$$

$$e(C_3, g) = e(g, \Theta_1 . \Theta_2)$$

or $(\sigma_0, \sigma_1)$ is a valid Waters signature on the one-time verification key $SVK$, i.e. the following equality stands:

$$e(\sigma_0, g^{1-\gamma}) = e(X, Y^{1-\gamma}) . e(H_{\mathbb{G}}(SVK)^{1-\gamma}, \sigma_1);$$

In the real encryption method, the pair $(\sigma_0, \sigma_1)$ does not satisfy the above equality (since it is chosen at random) but the proof of the statement (*) is a real proof. In the homomorphic evaluation algorithm, a simulated proof for a potentially false statement (*) will be obtained by using an actual Waters signature $(\sigma_0, \sigma_1)$ as a witness for generating the OR proof $\pi_{OR}$.

To generate $\pi_{OR}$, such step of generating a NIWI argument comprises the following actions: define $\gamma = 1$ and generate commitments $\vec{C}\Gamma_g, \vec{C}\Gamma_f, \vec{C}\Gamma_h, \vec{C}\Gamma_Y, \vec{C}\Gamma_H$ to the variables $\Gamma_g = g^\gamma$, $\Gamma_f = f^\gamma$, $\Gamma_h = h^\gamma, \Gamma_Y = Y^\gamma$ and $\Gamma_H = H_G(SVK)^\gamma$ and non interactive proof $(\pi_1, ..., \pi_9)$ for the relations, referenced eq1 to eq 9 respectively):

$$e\big(\Gamma_g, \Gamma_g\big) = e(\Gamma_g, g)$$

$$e\big(\Gamma_g, f\big) = e(g, \Gamma_f)$$

$$e\big(\Gamma_g, h\big) = e(g, \Gamma_h)$$

$$e\big(\Gamma_g, Y\big) = e(g, \Gamma_Y)$$

$$e\left(\Gamma_g, H_{\mathbb{G}}(SVK)\right) = e(g, \Gamma_H)$$

$$e\left(C_1, \Gamma_g\right) = e(\Gamma_f, \Theta_1)$$

$$e\left(C_2, \Gamma_g\right) = e(\Gamma_h, \Theta_2)$$

$$e\left(C_3 . \Theta_1^{-1} . \Theta_2^{-1}, \Gamma_g\right) = 1_{\mathbb{G}_T}$$

$$e\left(\sigma_0, g / \Gamma_g\right) = e(X, Y / \Gamma_Y) . e(H_{\mathbb{G}}(SVK) / \Gamma_H, \sigma_1))$$

The equation eq1 and eq6 to eq9 are quadratic, so that proofs $\pi_1, \pi_6, \pi_7, \pi_8, \pi_9$ require 9 group elements each. Equations eq2 to eq5 are linear, so that $\pi_2, \pi_3, \pi_4$ and $\pi_5$ require 12 group elements altogether. The whole proof $\pi_{OR}$ consists of $(\vec{C}\Gamma g, \vec{C}\Gamma_f, \vec{C}\Gamma h, \vec{C}\Gamma y, \vec{C}\Gamma_H, (\pi_1, ..., \pi_9))$ and thus costs 72 group elements;

- a step of generate a one-time signature with the one-time signature private key *SSK* previously generated:

$$sig = S(SSK, (C_0, C_1, C_2, C_3, z, r, u, \sigma_1, \vec{C}_{\sigma_0}, \vec{C}_{\Theta_1}, \vec{C}_{\Theta_2}, \pi_{OR}));$$

- a step of outputting the ciphertext :

$$C = (SVK, C_0, C_1, C_2, C_3, z, r, u, \sigma_1, \vec{C}_{\sigma_0}, \vec{C}_{\Theta_1}, \vec{C}_{\Theta_2}, \pi_{OR}, sig).$$

The function Ciphertext-Verify(PK,C), referenced 103, is a function that determines from a ciphertext with the same form as the one outputted by the function 102, and the public key *PK* if a received ciphertext has been generated correctly with function 102 and the given public key PK. Such function returns 1 if and only if *sig* is a valid one time signature with regards to the verification key SVK and if the element $\pi_{OR}$ is a valid proof. In that case, it means that the ciphertext has been obtained through the use of the function 102 and the given public key *PK*. Otherwise (if the function 103 outputs 0), it means that the ciphertext has not been obtained through the use of the function 102 and the given public key *PK*.

The function **Decrypt**(*PK, SK$_d$, C*), referenced 104, takes on input the private key $SK_d = (x_0, x1, x_2)$, the ciphertext C and a public key *PK*. It outputs the message that was encrypted with the function 102. Such function 104 comprises an execution of the function 103. Indeed, the function 1104 returns $\perp$ in the event that **Ciphertext-Verify**(*PK,C*) = 0.

Otherwise, the function 104 performs a step of determining the following element $C_0 . C_1^{-x_1} . C_2^{-x_2} C_3^{-x_0}$ from elements comprised in the ciphertext C and the private key *SK$_d$*. The element $C_0 . C_1^{-x_1} . C_2^{-x_2} C_3^{-x_0}$ corresponds to the message M.

The function **Eval(PK,** $SK_h$, $C^{(1)}$, $C^{(2)}$), referenced 105, enables to determine a ciphertext from two ciphertexts $C^{(1)}$ and $C^{(2)}$, the public key $PK$ and an evaluation key $SK_h$. For reminders, the evaluation key is defined as follows: $SK_h = sk_W = Y^x$. The function 105 comprises a step of parsing the ciphertexts $C^{(j)}$ (for each $j \in \{1,2\}$) as follows:

$$C^{(j)} = (SVK^j, C_0{}^{(j)}, C_1{}^{(j)}, C_2{}^{(j)}, C_3{}^{(j)}, z^{(j)}, r^{(j)}, u^{(j)}, \sigma_1{}^{(j)}, \vec{C}_{\sigma_0}{}^{(j)}, \vec{C}_{\Theta_1}{}^{(j)}, \vec{C}_{\Theta_2}{}^{(j)} \pi_{OR}{}^{(j)}, sig^{(j)})$$

Moreover, the function 105 comprises :

- a step of determining the elements $C_0 = \prod_{j=1}^2 C_0{}^{(j)}$ , $C_1 = \prod_{j=1}^2 C_1{}^{(j)}$, $\prod_{j=1}^2 C_2{}^{(j)}$ and $C_3 = \prod_{j=1}^2 C_3{}^{(j)}$ as well as $z = \prod_{j=1}^2 z^{(j)}$, $r = \prod_{j=1}^2 r^{(j)}$ and $u = \prod_{j=1}^2 u^{(j)}$;

- a step of generating a new one-time signature key pair $(SVK, SSK) \leftarrow \mathcal{G} (\lambda)$;

- a step of using the private evaluation key $SK_h = sk_W = Y^x$ in order to generate a valid Waters signature $(\sigma_0, \sigma_1)$;

- a step of using such Waters signature $(\sigma_0, \sigma_1)$ as a witness to generate a NIWI OR proof $\pi_{OR}$ that either $e(C_1, g) = e(f, \Theta_1)$; $e(C_2, g) = e(h, \Theta_2)$; $e(C_3, g) = e(g, \Theta_1.\Theta_2)$;
  or $(\sigma_0, \sigma_1)$ is a valid Waters signature on SKV, i.e., $e(\sigma_0, g) = e(X, Y)$. $e(H_G(SVK), \sigma_1)$); said proof having the following form $\pi_{OR} = (\vec{C}\Gamma g, \vec{C}\Gamma_f, \vec{C}\Gamma h, \vec{C}\Gamma y, \vec{C}\Gamma_H, (\pi_1, ..., \pi_9))$ and comprising 72 group elements;

- a step of generating a one time signature

$$sig = S(SSK, (C_0, C_1, C_2, C_3, z, r, u, \sigma_1, \vec{C}_{\sigma_0}, \vec{C}_{\Theta_1}, \vec{C}_{\Theta_2}, \pi_{OR}));$$

- a step of outputting the following ciphertext C = $(SVK, C_0, C_1, C_2, C_3, z, r, u, \vec{C}_{\sigma_0}, \vec{C}_{\Theta_1}, \vec{C}_{\Theta_2}, \pi_{OR}, sig)$.

If the scheme is instantiated using Groth's one-time signature, the whole ciphertext requires 94 group elements. At the 128-bit security level, each ciphertext fits within 5.8 kB.

Such scheme defined that the use of functions 101, 102, 103, 104 and 105 is a keyed homomorphic public key encryption scheme that is secure against chosen-ciphertext attacks (also named KH-CCA secure) and for which ciphertexts are publicly verifiable (that therefore enables to easily define a threshold keyed homomorphic public key encryption scheme). Indeed, with such scheme, no PPT (for *"Probabilistic Polynomial Time"*) adversary (i.e. a computationally bounded adversary) has a non-negligible advantage in this game:

1. The challenger runs the function 101 to obtain a public key *PK,* a decryption key $SK_d$ and a , homomorphic evaluation key $SK_h$. He gives the public *PK* to an adversary *A* and keeps private both the evaluation key $SK_h$ and the decyption key $SK_d$ to itself. In addition, the challenge initializes a set D as an empty set;

2. The adversary A adaptively makes queries to the following oracles:

- *Evaluation query:* at any time, the adversary A can invoke the evaluation oracle **Eval**(*PK,SKh,.*) (i.e. the function 105) on a pair $(C^{(1)}, C^{(2)})$ of ciphertexts of its choice. If there exists j $\in$ {1,2} such that **Ciphertext-Verify** (*PK, C^{(j)}*) = 0, the algorithm returns $\perp$. Otherwise, the oracle **Eval**(*PK,SK_h,.*) delivers a ciphertext $C \leftarrow$ Eval($SK_h, C^{(1)}, C^{(2)}$). In addition, if $C^{(1)} \in D$ or $C^{(2)} \in D$, he sets $D \leftarrow D \cup \{C\}$;
- *Reveal query:* at any time, the adversary A may also decide to corrupt the evaluator by invoking a RevHK oracle on a unique occasion. The oracle responds by returning the evaluation key $SK_h$, which is no more a secret parameter for the adversay;
- *Decryption query:* the adversary A can also invoke the decryption oracle on arbitrary ciphertexts C of his choice. If Ciphertext-Verify(PK, C) = 0, or if C $\in$ *D,* the oracle returns $\perp$. Otherwise, the oracle returns the output of the function **Decrypt**(*PK, SK_d, C);*

3. The adversary A chooses two equal-length messages $M_0$, $M_1$ and obtains a ciphertext $C^* = $ **Encrypt**$(PK, M_\beta)$

(i.e. the result of the function 102) for some random bit $\beta \overset{R}{\leftarrow} \{0,1\}$. . In addition, the challenger sets $D \leftarrow D \cup \{C^*\}$;

4. Then, the adversary A makes further queries as in step 2 with one additional restriction. Namely, if the adversary A chooses to obtain the evaluation key $SK_h$ (via a reveal query) at some point, no more decryption query is allowed beyond that point.

5. The adversary A outputs a bit $\beta'$ and is deemed successful if $\beta' = \beta$. As usual, the adversary A's advantage is measured as the distance $Adv(A) = \left| Pr(\beta' = \beta) - \frac{1}{2} \right|$.

The keyed homomorphic encryption scheme with publicly verifiable ciphertexts described previously relies on the use of non-interactive OR proofs as in a similar CCA-secure cryptosystem suggested by Groth in ("Simulation-Sound NIZK Proofs for a Practical Language and Constant Size Group Signatures", by Jens Groth, Asiacrypt'06, pp. 444-459). Specifically, the device that uses the function 102 generates a non-interactive proof that either: (i) the ciphertext is well-formed (namely, that the elements $(C_1, C_2, C_3)$ live in a two-dimensional subspace); (ii) or it knows a valid digital signature (for a signature scheme whose public key is part of the receiver's public key) on the one-time verification keySVK or which a one-time signature is generated on the entire ciphertext. In this case, the homomorphic evaluation key $SK_h$ consists of the private key of the digital signature whose verification key is included in the receiver's public key. For efficiency reasons, the previous scheme was instantiated by using Waters signatures as it makes it possible to work with linear pairing product equations in order to have shorter Groth-Sahai NIWI proofs. Other signature schemes than Waters' could be used for this purpose, but they are likely to incur quadratic pairing-product equations during the verification of OR proofs. When running the homomorphic evaluation algorithm, the evaluator is able to generate a non-interactive proof by generating the OR proof using a valid Waters signature $(\sigma_0, \sigma_1)$ as a witness. In contrast, the sender is not able to compute Waters signatures (as he does not have the private key) and always generates the OR proof using the witness $(\theta_1, \theta_2)$ showing that the ciphertext is well-formed. Consequently, the sender is unable to generate a proof for an invalid ciphertext unless he is able to forge valid Waters signatures. To generate OR proofs, we use a technique which consists in introducing extra binary exponents $\gamma \in \{0,1\}$. The NIWI property of these OR proofs guarantees that no one will be able to distinguish proofs generated using the encryption exponents $(\theta_1, \theta_2)$ as witnesses from proofs generated by the evaluator using a Waters signature $(\sigma_0, \sigma_1)$.

The drawback of the previous solution is that it requires relatively large ciphertexts, each of which costs about 90 group elements. To reduce this overhead, another embodiment hereunder builds on the same design principle (notably in that the homomorphic evaluation key consists of the simulation-trapdoor of a simulation-sound non-interactive proof system) but uses a different simulation-sound proof system which is tailored to proving membership in a linear subspaces is depicted. The advantage of this proof system is that it does not require OR proofs and thus provides much shorter non-interactive proofs. Each non-interactive simulation-sound proof consists of a linearly homomorphic structure preserving signature (based on a scheme suggested in the article "Linearly Homomorphic Structure-Preserving Signatures and their Applications", by B. Libert et al., published in the proceedings of the conference Crypto 2013) and can be seen as a Groth-Sahai-based proof of knowledge of a one-time linearly homomorphic signature.

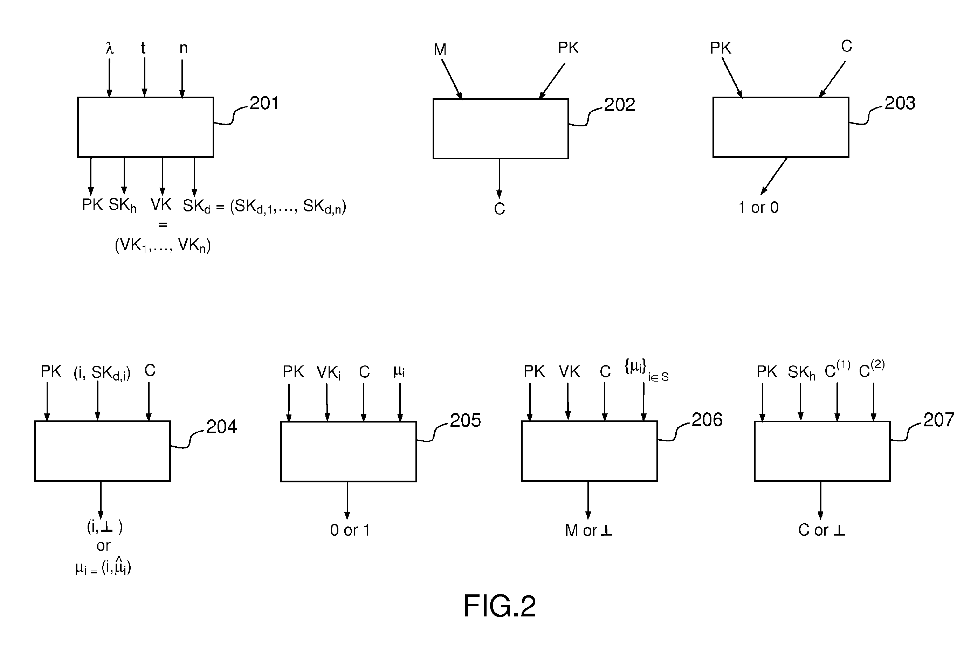

Figure 2 describes the main functions that define a ($t;n$) threshold keyed homomorphic encryption scheme, according to an embodiment of the invention.

The function **Keygen**($\lambda$, $t$, $n$), referenced 201, takes as input a security parameter $\lambda$ and integers t,n E poly($\lambda$) (with $1 \leq t \leq n$), where n is the number of decryption servers and $t$ is the decryption threshold (let's remark that when t = n = 1, the definition of a threshold keyed homomorphic public key encryption scheme corresponds to the one of a keyed homomorphic public key encryption scheme). It outputs elements ($PK, SK_h$, **VK,SK$_d$**), where PK is the public key, $SK_h$ is the homomorphic evaluation key, **SK$_d$** = ($SK_{d,1}, ..., SK_{d,n}$) is a vector of private key shares and $VK$ = ($VK_1, ..., VK_n$) is a vector of verification keys. For each $i$, the decryption server $i$ is given the share ($i, SK_{d,i}$). The verification key $VK_i$ will be used to check the validity of decryption shares generated using $SK_{d,i}$. In one embodiment, such function 201 comprises:

- a step of obtaining :

    * bilinear groups $\left( \mathbb{G}, \widehat{\mathbb{G}}, \mathbb{G}_T \right)$ of prime order $p > 2^\lambda$, with an efficient isomorphism $\psi \colon \widehat{\mathbb{G}} \to \mathbb{G}$ ;

    * generators $f, h \overset{R}{\leftarrow} \mathbb{G}, \hat{g} \overset{R}{\leftarrow} \widehat{\mathbb{G}}$;

* elements $x_0, x_1, x_2 \overset{R}{\leftarrow} \mathbb{Z}_p$;

* elements

$$X_1 = f^{x_1}g^{x_0} \in \mathbb{G}, X_2 = h^{x_2}g^{x_0} \in \mathbb{G},$$

where $g = \psi(\hat{g})$;

- a step of initiating some vectors as follows: $\vec{f} = (f, 1, g) \in \mathbb{G}^3$ and h = (1, h, g) $\in \mathbb{G}^3$;

- a step of obtaining random polynomials $P_1[Z], P_2[Z], P[Z] \in \mathbb{Z}_p[Z]$ of degree $t$-1 such that $P_1(0) = x_1, P_2(0) = x_2$ and $P(0) = x_0$. For each $i \in \{1, ..., n\}$, such step comprises a step of obtaining $VK_i = (Y_{i,1}, Y_{i,2})$ where $Y_{i,1} = f^{P_1(i)}g^{P(i)}$ and $Y_{i,2} = h^{P_2(i)}g^{P(i)}$;

- a step of obtaining random elements in the group

$$\mathbb{G} : \hat{f}_{r,1}, \hat{f}_{r,2} \overset{R}{\leftarrow} \mathbb{G}$$

and defining vectors

$$\vec{f}_{r,1} = \left(\hat{f}_{r,1}, 1, \hat{g}\right), \qquad \vec{f}_{r,2} = \left(1, \hat{f}_{r,2}, \hat{g}\right), \qquad \vec{f}_{r,3} = \vec{f}_{r,1}^{\phi_1} \cdot \vec{f}_{r,2}^{\phi_2} \cdot (1, 1, \hat{g})^{-1}$$

where

$$\phi_1, \phi_2 \overset{R}{\leftarrow} \mathbb{Z}_p .$$

The vectors $\vec{f}_{r,1}$, $\vec{f}_{r,2}$ and $\vec{f}_{r,3}$ are used as a Groth-Sahai Common reference string (CRS) for the generation of NIZK proofs showing the validity of decryption shares;

- a step of obtaining a strongly unforgeable one-time signature

$$\Sigma = (\mathcal{g}, S, \mho)$$

with verification keys consisting of L-bit strings, for some L $\in$ poly($\lambda$);

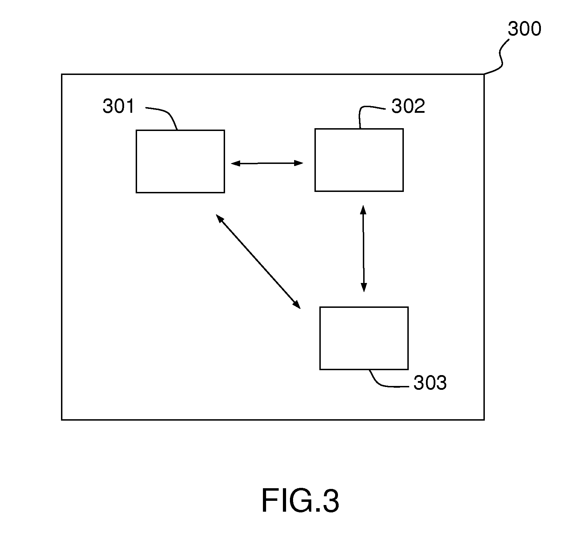

- a step of generating a key pair for the one-time linearly homomorphic structure-preserving signature, as the one described in the section entitled *"One-time linearly homomorphic structure-preserving signature"*, after the description of the figure 3, with n = 3. Let pk$_{ot}$ =

$$\left(\widehat{g_z}, \widehat{g_r}, \widehat{h_z}, \widehat{h_u}, \{\widehat{g_\iota}, \widehat{h_\iota}\}_{i=1}^3\right)$$

be the public key, and let $\mathrm{sk}_{ot} = \{(\varphi_i, \vartheta_i, \varpi_i)\}_{i=1}^3$ be the corresponding private key;

- a step of generating a one time homomorphic signatures $\left\{\left(Z_j, R_j, U_j\right)\right\}_{j=1}^2$ the vectors $\vec{f} = (f,1,g) \in \mathbb{G}^3$ and $\vec{h} = (1,h,g) \in G^3$. These consist of:

$$(Z_1, R_1, U_1) = (f^{-\varphi_1} g^{-\varphi_3}, f^{-\vartheta_1} g^{-\vartheta_3}, f^{-\varpi_1} g^{-\varpi_3});$$

$$(Z_2, R_2, U_2) = (h^{-\varphi_2} g^{-\varphi_3}, h^{-\gamma_2} g^{-\vartheta_3}, h^{-\varpi_1} h^{-\varpi_3});$$

- a step of generating Generate a key pair ($pk_{rand}$, $sk_{rand}$) for the randomizable signature described in the section of the description entitled *"randomizable linearly homomorphic structure-preserving signature"* after the description of the figure 3. Let

$$pk_{rand} = \left((\mathbb{G}, \widehat{\mathbb{G}}, \mathbb{G}_T), \widehat{g_z}, \widehat{g_r}, \widehat{h_z}, \widehat{h_u}, \{\widehat{g_i}, \widehat{h_i}\}_{i=1}^3, \vec{\hat{f}} = (\overrightarrow{\hat{f}_1}, \overrightarrow{\hat{f}_2}, \{\overrightarrow{\hat{f}_{3,i}}\}_{i=0}^L)\right)$$

denotes the public key and let

$$\text{let } sk_{rand} = (\{\chi_i, \gamma_i, \delta_i\}_{i=1}^3)$$

be the corresponding private key. For simplicity, the generation of ($pk_{rand}$, $sk_{rand}$) can re-use the same $(g, \hat{g})$ as in the step of obtaining the generators (in the first step);

- a step of using the key $sk_{rand}$ to generate one-time linearly homomorphic signatures $\left\{\left(z_j, r_j, u_j\right)\right\}_{j=1}^2$ on the independent vectors $\vec{f} = (f,1,g) \in \mathbb{G}^3$ and $\overline{h} = (1,h,g) \in G^3$. These are obtained as:

$$(z_1, r_1, u_1) = (f^{-\chi_1} g^{-\chi_3}, f^{-\gamma_1} g^{-\gamma_3}, f^{-\delta_1} g^{-\delta_3});$$

$$(z_2, r_2, u_2) = (h^{-\chi_2} g^{-\chi_3}, h^{-\gamma_2} g^{-\gamma_3}, h^{-\delta_2} g^{-\delta_3});$$

- a step of outputting the public key defined as follows:

$$PK = (g, \vec{f}, \vec{h}, \vec{f}_{r,1}, \vec{f}_{r,2}, \vec{f}_{r,3}, X_1, X_2, \text{pk}_{ot}, pk_{rand}, \{(Z_j, R_j, U_j)\}_{j=1}^2, \{(z_j, r_j, u_j)\}_{j=1}^2)$$

The evaluation key is $SK_h = sk_{rand} = \{\chi_i, \gamma_i, \delta_i\}_{i=1}^3$, while the i-th decryption key share is defined to be $SK_{d,i} = (P_1(i), P_2(i), P(i))$. The vector of verification keys is $VK = (VK_1, ..., VK_n)$ where $VK_i = (Y_{i,1}, Y_{i,1})$ for $i$=1 to $n$.

The function **Encrypt'**(*PK;* M), referenced 202, takes in a public key PK and a plaintext M. It outputs a ciphertext C.

In one embodiment, such function 202 comprises:

- a step of generating a one-time signature key pair $(SVK, SSK) \leftarrow \mathcal{G}\ (\lambda)$;

- a step of obtaining elements $\theta_1$,

$$\theta_2 \xleftarrow{R} \mathbb{Z}_p$$

and determining the following elements:

$$C_0 = M \cdot X_1^{\theta_1} \cdot X_2^{\theta_2}, \; C_1 = f^{\theta_1}, \; C_2 = h^{\theta_2}, \; C_3 = g^{\theta_1 + \theta_2};$$

- a step of obtaining a derived one time linearly homomorphic signature (Z, R, U) on the vectors $(C_1, C_2, C_3) \in G^3$. Namely, such derived signature is obtained by computing:

$$Z = Z_1^{\theta_1} \cdot Z_2^{\theta_2} \qquad R = R_1^{\theta_1} \cdot R_2^{\theta_2} \qquad U = U_1^{\theta_1} \cdot U_2^{\theta_2};$$

- a step of using the signatures $\left\{ \left( z_j, r_j, u_j \right) \right\}_{j=1}^2$ from the public *keyPK* to derive another one time linearly homomorphic signature (z,r,u) on $(C_1, C_2, C_3)$. Namely, using the encryption exponents $\theta_1, \theta_2 \in \mathbb{Z}_p$, the following elements are determined:

$$z = z_1^{\theta_1} \cdot z_2^{\theta_2} \qquad r = r_1^{\theta_1} \cdot r_2^{\theta_2} \qquad u = u_1^{\theta_1} \cdot u_2^{\theta_2};$$

- a step of using $SVK = (SVK[1], ..., SVK[L]) \in \{0,1\}^L$ in order to define the vector $\vec{f}_{SVK} = \vec{f}_{3,0} \cdot \prod_{i=1}^L \vec{f}_{3,i}^{SVK[i]}$ and assemble a Groth Sahai common reference string $\boldsymbol{f_{SVK}} = (\vec{f}1, \vec{f}_2, \vec{f}_{SVK})$, where *for j* $\in$ {1,2} and $\vec{f}_{SVK}$ is obtained in the same way. Then, using $\vec{\boldsymbol{f}}_{\boldsymbol{SVK}}$ generate commitments $C_z$, $C_r$, $C_u$ to the components of *(z,r,u)* $\in \mathbb{G}^3$ along with proofs $\pi_1, \pi_2$ as in step 3 of the signing algorithm of the randomizable linearly homomorphic structure preserving signature described in the section of the description entitled *"randomizable linearly homomorphic structure-preserving signature"* after the description of the figure 3). Let $(C_z, C_r, C_u, \pi_1, \pi_2) \in \mathbb{G}^{15}$ be the resulting signature;

- a step of generating a one-time signature with the private key *SSK* applied on the element $(C_0, C_1, C_2, C_3, Z, R, U, C_z, C_r, C_u, \pi_1, \pi_2)$. The resulting one-time signature is $\sigma = S(SSK, (C_0, C_1, C_2, C_3, Z, R, U, C_z, C_r, C_u, \pi_1, \pi_2)$;

- a step of outputting a ciphertext C = $(SVK, C_0, C_1, C_2, C_3, Z, R, U, C_z, C_r, C_u, \pi_1, \pi_2, \sigma)$.

The function Ciphertext-Verify'(PK, *C*), referenced 203, takes as input a public key *PK* and a ciphertext C. It outputs 1 if C is deemed valid with regards to the public key *PK,* and 0 otherwise. Such function 203 comprises :

- a step of verifying a one-time signature: i.e., determining if $V(SVK, (C_0, C_1, C_2, C_3, Z, R, U, C_z, C_r, C_u, \pi_1, \pi_2), \sigma) = 1$;
- a step of verifying that both $(Z, R, U) \in \mathbb{G}^3$ and $(C_z, C_r, C_u, \pi_1, \pi_2) \in \mathbb{G}^{15}$ are valid linearly homomorphic signature

of $(C_1, C_2, C_3)$. Namely, they should satisfy the relations $1_{\mathbb{G}_T} = e(Z, \hat{G}_z) \cdot e(R, \hat{G}_r) \cdot \prod_{i=1}^{3} e(C_i, \hat{G}_i)$ and

$1_{\mathbb{G}_T} = e(Z, \hat{H}_z) \cdot e(U, \hat{H}_u) \cdot \prod_{i=1}^{3} e(C_i, \hat{H}_i)$. As well as, if we define $\overrightarrow{\hat{f}_{SVK}} = \overrightarrow{\hat{f}_{3,0}} \prod_{i=1}^{L} \overrightarrow{\hat{f}_{3,i}}^{SVK[i]}$ the

equalities

$$\prod_{i=1}^{3} E((1_{\mathbb{G}}, 1_{\mathbb{G}}, C_i), \hat{g}_i)^{-1} = E(\vec{C}_z, \widehat{g_z}) . E(\vec{C}_r, \widehat{g_r}) . E\left(\pi_{1,1}, \vec{\hat{f}_1}\right) . E\left(\pi_{1,2}, \vec{\hat{f}_2}\right) . E\left(\pi_{1,3}, \vec{\hat{f}_{SVK}}\right) ;$$

$$\prod_{i=1}^{3} E((1_{\mathbb{G}}, 1_{\mathbb{G}}, C_i), \hat{h}_i)^{-1} = E(\vec{C}_z, \widehat{h_z}) . E(\vec{C}_u, \widehat{h_u}) . E\left(\pi_{2,1}, \vec{\hat{f}_1}\right) . E\left(\pi_{2,2}, \vec{\hat{f}_2}\right) . E\left(\pi_{2,3}, \vec{\hat{f}_{SVK}}\right) .$$

If these conditions are satisfied, the function 203 returns 1, otherwise, it returns 0.

The function Share-Decrypt(PK, i, $SK_{d,i}$, C), referenced 204, takes on input a public key *PK*, a ciphertext C and a private key share $(i, SK_{d,i})$, and outputs a special symbol $(i, \perp)$ if Ciphertext-Verify'(PK, C) = 0, otherwise, it outputs a decryption share $\mu_i = (i, \hat{\mu}_i)$.

More precisely, in one embodiment, such function 204 takes on input the private

key $SK_{d,i} = (P_1(i), P_2(i), P(i)) \in \mathbb{Z}_p^3$ and C, return $(i, \perp)$ if **Ciphertext-Verify'**(*PKC*) = 0. Otherwise, such function 204 comprises a step of determining the decryption share $\hat{\mu}_i = (v_i, \vec{C}_{P_1}, \vec{C}_{P_2}, \vec{C}_P, \pi_{v_i})$ which consists of a partial decryption $v_i = C_1^{P_1(i)} \cdot C_2^{P_2(i)} \cdot C_3^{P(i)}$, commitments $\vec{C}_{P_1}, \vec{C}_{P_2}, \vec{C}_P$ to exponents $P_1(i), P_2(i), P(i) \in \mathbb{Z}_p$ and a proof

$\pi_{v_i}$ that these relations are satisfied:

$$v_i = C_1^{P_1(i)} \cdot C_2^{P_2(i)} \cdot C_3^{P(i)}, \ Y_{i,1} = f^{P_1(i)} g^{P(i)}, \ Y_{i,2} = h^{P_2(i)} g^{P(i)}.$$

The commitments $\vec{C}_{P_1}, \vec{C}_{P_2}, \vec{C}_P$ and the proof $\pi_{v_i}$ are generated using the Groth-Sahai common reference string $(\vec{f}_{r,1}, \vec{f}_{r,2}, \vec{f}_{r,3})$.

The function Share-Verify(PK, $VK_i$, C, $\mu_i$), referenced 205, takes as input the public key *PK*, the verification key $VK_i$, a ciphertext C and purported decryption share $\mu_i = (i, \hat{\mu}_i)$ It outputs either 1 or 0. In the former case, $\mu_i$ is said to be a valid decryption share. We adopt the convention that $(i, \perp)$ is an invalid decryption share. In one embodiment, the verification key $VK_i$ has the following form: $(Y_{i,1}, Y_{i,2}) \in G^2$. If $\hat{\mu}_i = \perp$ or if $\hat{\mu}_i$ cannot be parsed properly as $(v_i, \vec{C}_{P_1}, \vec{C}_{P_2}, \vec{C}_P, \pi_{\mu_i})$, 0 is returned. Otherwise, if $\pi_{v_i}$ is a valid proof, 1 is returned.

The function **Combine**(*PK*, **VK**, C, $\{\mu_i\}_{i \in S}$), referenced 206, takes as input the elements *PK*, **VK**, C and a t-subset $S \subset \{1,...,n\}$ with decryption shares $\{\mu_i\}_{i \in S}$, and outputs either a plaintext M or $\perp$ if the set contains invalid decryption shares. Such function 206 comprises a step of parsing the decryption share $\hat{\mu}_i$ as $(v_i, \vec{C}_{P_1}, \vec{C}_{P_2}, \vec{C}_P, \pi_{\mu_i})$ for each $i \in S$, such step returns $\perp$ if Share-Verify(PK, VK, C, $(i, \hat{\mu}_i)$) = 0. If Share-Verify(PK, VK, C, $(i, \hat{\mu}_i)$) = 1 for each $i \in S$ the function comprises a further step of determining (by Lagrange interpolation) the following value:

$$\nu = \prod_{i \in S} \nu_i^{\Delta_{i,S}(0)} = C_1^{x_1} \cdot C_2^{x_2} \cdot C_3^{y} = X_1^{\theta_1} \cdot X_2^{\theta_2}$$

which allows recovering M = $C_0/\nu$.

At last, the function **Eval'**($PK$, $SK_h$, $C^{(1)}$, $C^{(2)}$), referenced 207, is an homomorphic evaluation algorithm. It takes as input the evaluation key $SK_h$ and two distinct ciphertexts $C^{(1)}$ and $C^{(2)}$. If there exists j $\in$ {1,2} such that Ciphertext-Verify'(PK, $C^{(j)}$) = 0, the algorithm returns $\perp$. Otherwise, it conducts a binary homomorphic operation over $C^{(1)}$ and $C^{(2)}$ and outputs a ciphertext C.

More precisely, in one embodiment of the invention, such function 207 comprises :

- a step of parsing $SK_h$ as $\{\chi_i, \gamma_i, \delta_i\}_{i=1}^{3}$ and for each $j \in$ {1,2}, parsing $C^{(j)}$ as :

$$C^{(j)} = (SVK^j, C_0^{(j)}, C_1^{(j)}, C_2^{(j)}, C_3^{(j)}, Z^{(j)}, R^{(j)}, U^{(j)}, C_z^{(j)}, C_r^{(j)}, C_u^{(j)}, \pi_1^{(j)}, \pi_2^{(j)}, \sigma^{(j)});$$

- a step of determining the elements $C_0 = \prod_{j=1}^{2} C_0^{(j)}$, $C_1 = \prod_{j=1}^{2} C_1^{(j)}$, and $C_3 = \prod_{j=1}^{2} C_3^{(j)}$ as well as $Z = \prod_{j=1}^{2} Z^{(j)}, R = \prod_{j=1}^{2} R^{(j)}$ and $U = \prod_{j=1}^{2} U^{(j)}$;

- a step of generating a new one-time signature key pair $(SVK, SSK) \leftarrow g(\lambda)$;

- a step of using the private evaluation key $SK_h = \{\chi_i, \gamma_i, \delta_i\}_{i=1}^{3}$ in order to generate a linearly homomorphic signature $\vec{C}_z, \vec{C}_r, \vec{C}_u, \overrightarrow{\pi_1, \pi_2}$ on the vector $(C_1, C_2, C_3)$ using a randomizable linearly homomorphic structure-preserving signature (as the one described in the section of the description after the description of the figure 3) for the file identifier SVK;

- a step of outputting the derived ciphertext $(SVK, C_0, C_1, C_2, C_3, Z, R, U, \overline{C}_z, \overrightarrow{C_r C_u}, \overrightarrow{\pi_1, \pi_2}, \sigma)$ where $\sigma = S(SSK, (C_0, C_1, C_2, C_3, Z, R, U, \vec{C}_z, \vec{C}_r, \vec{C}_u, \overrightarrow{\pi_1, \pi_2}))$.

If such scheme is instantiated using Groth's discrete-logarithm-based one-time signature as described in the article *"Simulation-sound NIZK proofs for a practical language and constant size group signatures"* by Groth and published in the proceedings of the conference Asiacrypt 2006, the ciphertext consists of 26 elements of G and one element of $Z_p$. It can be proven that the KH-CCA security of the scheme assuming that $\Sigma$ is a strongly unforgeable one-time signature and that the DLIN assumption (i.e. the Decision Linear Problem assumption) holds in $\mathbb{G}$ and $\widehat{\mathbb{G}}$. The security proof stands in the standard model and does not rely on random oracles.

Let's remark that the above syntax generalizes that of ordinary threshold cryptosystems. By setting $SK_h = \varepsilon$ and discarding the evaluation algorithm, we obtain the definition of a threshold encryption system.

The threshold keyed-homomorphic public-key cryptosystem disclosed in figure 2 is secure against chosen ciphertext attacks (or KH-CCA secure). Indeed, no PPT adversary has noticeable advantage in this game:

1. The challenger runs **Keygen**($\lambda$; **t**; n) to obtain a public key *PK,* a vector of decryption key shares $SK_d$ = $(SK_{d,1}, ...,SK_{d,n})$ and a, homomorphic evaluation key $SK_h$. It gives *PK* and keeps $(SK_h; SK_d)$ to itself. In addition, the challenge initializes a set D as an empty set;

2. The adversary A adaptively makes queries to the following oracles on a polynomial number of occasions:

- *Corruption query:* at any time, the adversary A may decide to corrupt a server. To this end, it specifies an index $i \in$ {1, ...,n} and obtains the private key share $SK_{d,i}$.

- *Evaluation query:* at any time, the adversary A can invoke the evaluation oracle Eval'($SK_h$,.) on a pair ($C^{(1)}$, $C^{(2)}$) of ciphertexts of its choice. If there exists $j \in$ {1,2} such that Ciphertext-Verify'(PK, $C^{(j)}$) = 0, the algorithm returns $\perp$. Otherwise, the oracle Eval($SK_h$,.) computes $C \leftarrow$ Eval($SK_h$, $C^{(1)}$, $C^{(2)}$) and returns C. In addition, if $C^{(1)} \in D$ or $C^{(2)} \in D$, it sets $D \leftarrow D \cup \{C\}$.

- *Reveal query:* at any time, the adversary A may also decide to corrupt the evaluator by invoking the RevHK oracle on a unique occasion. The oracle responds by returning $SK_h$.
- *Decryption query:* the adversary A can also invoke the partial decryption oracle on arbitrary ciphertexts C and indexes $i \in \{1, ...,n\}$.If Ciphertext-Verify'(PK, C) = 0, or if C $\in$ D, the oracle returns $\perp$. Otherwise, the oracle returns the decryption share $\mu_i \leftarrow$ **Share-Decrypt**$(PK, i, SK_{d,i}, C);$

3. The adversary A chooses two equal-length messages $M_0$, $M_1$ and obtains a R ciphertext $C^* =$ **Encrypt'**(PK, $M_\beta$) for some random bit . In addition, the challenger sets $D \leftarrow D \cup \{C^*\}$;

4. The adversary A makes further queries as in step 2 with some restrictions. Namely, the adversary A cannot corrupt more than t -1 servers throughout the entire game. Moreover, if the adversary A chooses to obtain $SK_h$(via the RevHK oracle) at some point, no more decryption query is allowed beyond that point;

5. The adversary A outputs a bit $\beta'$ and is deemed successful if $\beta' = \beta$. As usual, adversary A's advantage is measured as the distance $Adv(A) = \left| Pr(\beta' = \beta) - \frac{1}{2} \right|.$

Again, if we set $SK_h = \varepsilon$ and remove the Eval and RevHK oracles, we obtain a definition of chosen-ciphertext security for classical threshold cryptosystems. It is important to note that, even if the adversary A chooses to obtain $SK_h$ immediately after having seen the public key *PK* it still has access to the decryption oracle before the challenge phase. In other words, the scheme should remain IND-CCA1 (i.e. secure against non-adaptive chosen ciphertext attacks, where the adversary has no access to decryption oracles beyond the challenge phase) if the adversary A is given PK and $SK_h$ at the outset of the game.

The schemes depicted in the figures 1 and 2 prevent an adversary to obtain information by invoking the decryption oracle on invalid ciphertexts either before or after post challenge decryption queries.

Such schemes rely on the three following features:

(a) The use of a derived signature *(z, r, u)* on the vectors $(C_1, C_2, C_3)$ E $G^3$ obtained from the execution of the function 102 and comprised in the ciphertext (in the first embodiment), and of a derived signature (Z,R, U) on the vectors $(C_1, C_2, C_3)$ E $G^3$ obtained from the execution of the function 202 and comprised in the ciphertext (in the first embodiment). Such derived signature serves as publicly verifiable evidence that elements $(f, g, h, C_1, C_2, C_3)$ has the right form; The second derived signature (Z, R, U) can be seen as a homomorphic proof that $(C_1, C_2, C_3)$ E $G^3$ are well-formed and it allows retaining CCA1 security when the evaluation key is compromised

(b) The use of a simulation-sound proof that $(C_1, C_2, C_3)$ E $G^3$ is well-formed. This proof $(C_z, C_r, C_u, \pi_1, \pi_2)$ E $G^{15}$ consists of commitments to group elements (z,r,u) that are obtained as functions of private random values $\theta_1$, $\theta_2$, and proofs associated to these commitments. This simulation-sound proof can be viewed as an additional homomorphic signature comprised in the ciphertext. In the first embodiment, this simulation-sound proof is obtained as a set of elements $\sigma_1$, $\vec{C}_{\sigma 0}$, $\vec{C}_{\Theta 1}$, $\vec{C}_{\Theta 2}$ and $\pi_{OR}$. In the second embodiment, it corresponds to the determination of another derived signature on the vectors $(C_1, C_2, C_3) \in G^3$, i.e. the signature *(z, r, u)*, the generation of commitments $C_z$, $C_r$, $C_u$ to the components of $(z,r,u) \in G^3$ along with proofs $\pi_1$, $\pi_2$. In such embodiment, additional signature corresponds to $(C_z, C_r, C_u, \pi_1, \pi_2) \in G^{15}$;

(c) The generation and the use of a one time key pair (the pair *(SVK, SSK)* in the first embodiment and in the second embodiment) in order to sign the concatenation of the elements $(C_0, C_1, C_2, C_3)$ with the derived signature mentioned at point (a) and the additional signature mentioned at point (b). The ciphertext then comprises the signature obtained at point (c), the verification key *SVK* and the signed elements (i.e. the previously mentioned concatenation).

Let's remark that the new simulation-sound non-interactive proof based on homomorphic signatures can be used in other constructions. In the second embodiment, it was used in combination with the Cramer-Shoup encryption paradigm. Alternatively, it can be used in the Naor-Yung encryption paradigm (described in the article "Public-key Cryptosystems Provably Secure against Chosen Ciphertext Attacks"by M. Naor et al., published in the proceedings of the conference STOC 1990,) and its refinement suggested by Sahai described in the article "Non-Malleable Non-Interactive Zero Knowledge and Adaptive Chosen-Ciphertext Security", published in the proceedings of the conference FOCS 1999). In its basic form, the Naor-Yung technique consists in encrypting the same message under two distinct public keys and appending a non-interactive proof of plaintext equality. Sahai showed that, if the underlying proof system is simulation-sound, the resulting cryptosystem is secure against adaptive chosen-ciphertext attacks (IND-CCA2). The new unbounded simulation-sound proof system can be used for this purpose because, in the El-gamal and Boneh-Boyen-Shacham encryption schemes, the equality of two encrypted plaintexts can be expressed in termed of membership (of a vector of group elements obtained by dividing the two ciphertexts) in a linear subspace. The described embodiments in the present document rather uses the Cramer-Shoup paradigm because it yields shorter ciphertexts and, in the threshold setting, it makes it easier to prove security against adaptive corruptions (as pointed out in the article *"Non-Interactive CCA2-Secure Threshold Cryptosystems with Adaptive Security: New Framework and Constructions"* by B. Libert, published in the proceedings of the conference, TCC 2012). However, one skilled in the art could adapt the presented embodiments from the teachings of the present document.

Figure 3 presents a device that can be used to perform one or several steps of methods disclosed in the present document.

Such device referenced 300 comprises a computing unit (for example a CPU, for *"Central Processing Unit"*), referenced 301, and one or several memory units (for example a RAM (for *"Random Access Memory"*) block in which intermediate results can be stored temporarily during the execution of instructions a computer program, or a ROM block in which, among other things, computer programs are stored, or an EEPROM *("Electrically-Erasable Programmable Read-Only Memory")* block, or a flash block) referenced 302. Computer programs are made of instructions that can be executed by the computing unit. Such device 300 can also comprise a dedicated unit, referenced 303, constituting an input-output interface to allow the device 300 to communicate with other devices. In particular, this dedicated unit 303 can be connected with an antenna (in order to perform communication without contacts), or with serial ports (to carry communications "contact"). Let's remark that the arrows in Figure 3 means that the linked units can exchange data through buses for example together.

In an alternative embodiment, some or all of the steps of the method previously described, can be implemented in hardware in a programmable FPGA *("Field Programmable Gate Array")* component or ASIC (*"Application-Specific Integrated Circuit")* component.

In an alternative embodiment, some or all of the steps of the method previously described, can be executed on an electronic device comprising memory units and processing units as the one disclosed in the Figure 3.

**A one-time linearly homomorphic structure-preserving signatures**

A one-time linearly homomorphic signature scheme is a scheme where messages and signatures only consist of group elements (here, "one time" means that only one linear subspace can be signed using a private key). The security of such scheme can be proven under an assumption which is implied by the DLIN assumption.

A one-time linearly homomorphic structure-preserving signature scheme is defined by a set of algorithms/functions defined as follows:

**Keygen($\lambda$,*n*)** : given a security parameter $\lambda$, and the dimension n $\in$ N of the subspace to be signed, choose bilinear group (G, $\hat{G}$, G$_T$) of prime order $p > 2^\lambda$. Then, conduct the following steps.

1. Choose ;

2. For *i* = 1 to *n,* pick $\chi_i, \gamma_i, \delta_i \xleftarrow{R} \mathbb{Z}_p^{*}$ and compute group elements $\widehat{g_i} = \widehat{g_z}^{\chi_i} \cdot \widehat{g_r}^{\gamma_i}$

and $\widehat{h_i} = \widehat{h_z}^{\chi_i} \cdot \widehat{h_u}^{\gamma_i}$ ;

The private key is $sk = (\{\chi_i, \gamma_i, \delta_i\}_{i=1}^n)$ while the public key consists of $pk = (\widehat{g_z},$

$\widehat{g_r}, \widehat{h_z}, \{\widehat{g_i}, \widehat{h_i}\}_{i=1}^n)$ .

Sign(sk, $\tau$, ($M_1$, ..., $M_n$) : to sign a vector ($M_1$, ..., $M_n$) $\in$ G$^n$ with regards to the file identifier $\tau$ using

$sk = (\{\chi_i, \gamma_i, \delta_i\}_{i=1}^n)$, compute and output $\sigma = (z,r,u) \in$ G$^3$ where

$$z = \prod_{i=1}^l M_i^{-\chi_i}, r = \prod_{i=1}^l M_i^{-\gamma_i} \text{ and } u = \prod_{i=1}^l M_i^{-\delta_i}.$$

SignDerive (pk, $\tau$, $(\{\omega_i, \sigma_i\}_{i=1}^{l})$): given pk, an identifier $\tau$ and $l$ uplet $(\omega_i, \sigma_i)$, parse $\sigma_i$ as $\sigma_i = (z_i, r_i, u_i))$ E $G^3$ for $i = 1$ to $l$. Then, compute and return = (z,r,u) E $G^3$, where $Z = \prod_{i=1}^{l} z_i^{\omega_i}$, $r = \prod_{i=1}^{l} r_i^{\omega_i}$ and $u = \prod_{i=1}^{l} u_i^{\omega_i}$.

**Verify(pk,** $\sigma$, $\tau$, $(M_1, ..., M_n)$: given a signature $\sigma$ = (z, r, u) E $G^3$, a file identifier $\tau$ and a vector $(M_1, ..., M_n)$, return 1 if and only if $(M_1, ..., M_n) \neq (1_G, ..., 1_G)$ and (z, r, u) satisfy

$$1_{\mathbb{G}_T} = e(z, \widehat{g_z}).\,e(r, \widehat{g_r}).\prod_{i=1}^{n} e(M_i, \widehat{g_i})$$

and

$$1_{\mathbb{G}_T} = e(z, \widehat{h_z}).\,e(r, \widehat{h_r}).\prod_{i=1}^{n} e(M_i, \widehat{h_i}) \,.$$

**A Randomizable Linearly Homomorphic StructurePreserving Signature**

This section describes a randomizable linearly homomorphic structure-preserving signature scheme. Compared to the known original scheme, there is one slight modification: while the original scheme uses symmetric pairings, the description below allows for asymmetric pairing configurations ($\mathbb{G}$, $\widehat{\mathbb{G}}$, $\mathbb{G}_T$) of Type II. Namely, we assume the availability of an efficiently computable isomorphism $\psi: \widehat{\mathbb{G}} \to \mathbb{G}$. The reason is that the security proof would require a less standard assumption than SXDLIN in Type III configurations. In this construction, each signature basically consists of a NIWI proof of knowledge of a one-time signature. This proof of knowledge is generated on a Groth-Sahai CRS $(\vec{f}_1, \vec{f}_2, \vec{f}_\tau)$ that depends on the tag $\tau$ that identifies the dataset which is being signed. In the following, for any vectors $\vec{f} = (\hat{f}_1, \hat{f}_2, \hat{f}_3)$ and $\vec{g} = (g_1, g_2, g_3)$, we define the notations $E(g, \vec{f}) = (e(g, \hat{f}_1), e(g, \hat{f}_2), e(g, \hat{f}_3))$ and $E(\vec{g}, f) = (e(g_1, f), e(g_2, f), e(g_3, f))$.

**Keygen**($\lambda$, n) : given a security parameter $\lambda$, and the dimension n E N of the subspace to be signed, choose bilinear group e ($\mathbb{G}$, $\widehat{\mathbb{G}}$, $\mathbb{G}_T$) of prime order $p > 2^\lambda$ with an efficient isomorphism $\psi: \widehat{\mathbb{G}} \to \mathbb{G}$. Then, conduct the following steps:

- Choose generators $\hat{g} \xleftarrow{R} \widehat{\mathbb{G}}$ and determine $g = \psi(\hat{g})$;

- Choose $\hat{h}_u \xleftarrow{R} \widehat{\mathbb{G}}$, $\alpha_z, \alpha_r, \beta_z \xleftarrow{R} \mathbb{Z}_p^*$ and define $\hat{g}_z = \hat{h}_u^{\alpha_z}$, $\hat{g}_r = \hat{h}_u^{\alpha_r}$, $\hat{h}_z = \hat{h}_u^{\beta_z}$

- For $i = 1$ to n, pick random $\chi_i, \gamma_i, \delta_i \xleftarrow{R} \mathbb{Z}_p^*$ and compute group elements

$$\hat{g}_i = \hat{g}_z^{\chi_i}.\hat{g}_r^{\gamma_i}, \hat{h}_i = \hat{h}_z^{\chi_i}.\hat{h}_u^{\delta_i}.$$

- Generate L + 1 Groth Sahai common reference strings. To this end, choose $\hat{f}_1, \hat{f}_2 \xleftarrow{R} \widehat{\mathbb{G}}$ and define vectors $\vec{f}_1$ = $(\vec{f}_1, 1, g) \in \widehat{\mathbb{G}}^3, \vec{f}_2 = (1, \vec{f}_2, \hat{g}) \in \hat{G}^3$. Then, pick $\vec{f}_{3,i} \xleftarrow{R} \widehat{\mathbb{G}}^3$ $i = 0$ to L.

The public key consists of

$$PK = \left(\left(\mathbb{G}, \widehat{\mathbb{G}}, \mathbb{G}_T\right), \hat{g}_z, \hat{g}_r, \hat{h}_z, \hat{h}_u, \{\hat{g}_i \hat{h}_i\}_{i=1}^{n}, \vec{f} = (\vec{f}_1, \vec{f}_2, \{\vec{f}_{3,i}\}_{i=0}^{L})\right), \quad \text{while the private key is}$$

$$sk = (\psi(\hat{h}_z)^{\alpha_r}, \{\chi_i, \gamma_i, \delta_i\}_{i=1}^n).$$

**Sign(sk**, $\tau$, $(M_1, ..., M_n)$: to sign a vector $(M_1, ..., M_n)$ E $G^n$ with the file identifier $\tau$ using $sk = (\psi(\hat{h}_z)^{\alpha_r}, \{\chi_i, \gamma_i, \delta_i\}_{i=1}^n)$ conduct the following steps: R

1. Choose $\theta \overset{R}{\leftarrow} \mathbb{Z}_p$ and determine the following elements z, r and u as follows:

$$z = \psi(\hat{g}_r)^{\theta} \prod_{i=1}^l M_i^{-\chi_i}, r = \psi(\hat{g}_z)^{-\theta} \prod_{i=1}^l M_i^{-\gamma_i} \text{ and } u = \psi(\hat{h}_z)^{-\theta\alpha_r} \prod_{i=1}^l M_i^{-\delta_i}.$$

2. Using the bits of the file identifier $\tau = (\tau[1], ..., \tau[L])$ E $\{0,1\}^L$, define the vector $\vec{f}_\tau = \vec{f}_{3,0} \cdot \prod_{i=1}^L \vec{f}_{3,i}^{\tau[i]}$ and assemble a Groth Sahai common reference string $f_\tau = (\vec{f}_1, \vec{f}_2, \vec{f}_\tau)$, where $\vec{f}_j = \psi(\hat{f}_j)$ for $j \in \{1,2\}$ and $\vec{f}_{3,k} = \psi(\hat{f}_{3,k})$ for $k \in \{0, ..., L\}$.

3. Then, using $f_\tau$ generate Groth Sahai commitments $\vec{C}_z, \vec{C}_r, \vec{C}_u$ to the components of $(z, r, u) \in G^3$ along with proofs $\pi_1, \pi_2$ as follows: $\vec{C}_z = (1_G, 1_G, z) \cdot \vec{f}_1^{vz,1} \vec{f}_2^{vz,2} \vec{f}_3^{vz,3}$, $\vec{C}_r = (1_G, 1_G, r) \cdot \vec{f}_1^{vr,1} f_2^{vr,2} \vec{f}_3^{vr,3}$ and $\vec{C}_u = (1_G, 1_G, u) \cdot \vec{f}_1^{vr,1} f_2^{vr,2} \vec{f}_3^{vr,3}$. Then generate a NIWI proofs $\vec{\pi}_1 = (\pi_{1,1}, \pi_{1,2}, \pi_{1,3}) \in G^3$ and $\vec{\pi}_2 = (\pi_{2,1}, \pi_{2,2}, \pi_{2,3}) \in G^3$ that $(z, r, u)$ satisfy the equations

$$1_{\mathbb{G}_T} = e(z, \hat{g}_z) \cdot e(r, \hat{g}_r) \cdot \prod_{i=1}^n e(M_i, \hat{g}_i)$$ and

$$1_{\mathbb{G}_T} = e(z, \hat{h}_z) \cdot e(u, \hat{h}_u) \cdot \prod_{i=1}^n e(M_i, \hat{h}_i).$$

These proofs are obtained as

$$\vec{\pi}_1 = (\psi(\hat{g}_z)^{-v_{z,1}} \cdot \psi(\hat{g}_r)^{-v_{r,1}}, \psi(\hat{g}_z)^{-v_{z,2}} \cdot \psi(\hat{g}_r)^{-v_{r,2}}, \psi(\hat{g}_z)^{-v_{z,3}} \cdot \psi(\hat{g}_r)^{-v_{r,3}});$$

$$\vec{\pi}_2 = (\psi(\hat{h}_z)^{-v_{z,1}} \cdot \psi(\hat{h}_u)^{-v_{u,1}}, \psi(\hat{h}_z)^{-v_{z,2}} \cdot \psi(\hat{h}_u)^{-v_{u,2}}, \psi(\hat{h}_z)^{-v_{z,3}} \cdot \psi(\hat{h}_u)^{-v_{u,3}});$$

and satisfy the verification equations

$$\prod_{i=1}^n E((1_{\mathbb{G}}, 1_{\mathbb{G}}, M_i), \hat{g}_i)^{-1} = E(\vec{C}_z, \hat{g}_z) \cdot E(\vec{C}_r, \hat{g}_r) \cdot E(\pi_{1,1}, \vec{\hat{f}}_1) \cdot E(\pi_{1,2}, \vec{\hat{f}}_2) \cdot E(\pi_{1,3}, \vec{\hat{f}}_\tau)$$

and

$$\prod_{i=1}^n E((1_{\mathbb{G}}, 1_{\mathbb{G}}, M_i), \hat{h}_i)^{-1} = E(\vec{C}_z, \hat{h}_z) \cdot E(\vec{C}_u, \hat{h}_u) \cdot E(\pi_{2,1}, \vec{\hat{f}}_1) \cdot E(\pi_{2,2}, \vec{\hat{f}}_2) \cdot E(\pi_{2,3}, \vec{\hat{f}}_\tau)$$

The signature consists of $\sigma = (\vec{C}_z, \vec{C}_r, \vec{C}_u, \vec{\pi}_1, \vec{\pi}_2) \in G^{15}$.

SignDerive (pk, $\tau(\{\omega_i, \sigma_i\}_{i=1}^l)$); given pk, an identifier $\tau$ and $l$ uplet $(\omega_i, \sigma_i)$, parse $\sigma_i$ as $\sigma_i = (\vec{C}_{z,i}, \vec{C}_{r,i}, \vec{C}_{u,i},$

$\overrightarrow{\pi_{1,i}}, \overrightarrow{\pi_{2,i}})) \in G^{15}$ for $i$ = 1 to $l$. Then, compute the elements

$$\vec{C}_z = \prod_{i=1}^{l} \vec{C}_{z,i}{}^{\omega_i} \quad , \quad \vec{C}_r = \prod_{i=1}^{l} \vec{C}_{r,i}{}^{\omega_i}, \quad \vec{C}_u = \prod_{i=1}^{l} \vec{C}_{u,i}{}^{\omega_i} \quad , \overrightarrow{\pi}_1 = \prod_{i=1}^{l} \overrightarrow{\pi}_{1,i}{}^{\omega_i} \quad \text{and} \quad , \overrightarrow{\pi}_2 = \prod_{i=1}^{l} \overrightarrow{\pi}_{2,i}{}^{\omega_i}.$$

Then, re-randomize the above commitments and proofs and return the re-randomized values of $\sigma = (\vec{C}_z, \vec{C}_r, \vec{C}_u, \overrightarrow{\pi}_1, \overrightarrow{\pi}_2)$.

Verify(pk, $\sigma$, $\tau$, $(M_1, ..., M_n)$) : given a purported signature $\sigma = (z, r, u) \in G^3$, a file identifier $\tau$ and a message $(M_1, ..., M_n)$, parse $\sigma$ as $(\vec{C}_z, \vec{C}_r, \vec{C}_u, \overrightarrow{\pi}_1, \overrightarrow{\pi}_2)$. Return 1 if and only if $(M_1, ..., M_n) \neq (1_G, ..., 1_G)$ and $(z, r, u)$ satisfy the equations

$$\prod_{i=1}^{n} E((1_G, 1_G, M_i), \hat{g}_i)^{-1} = E(\vec{C}_z, \hat{g}_z) . E(\vec{C}_r, \hat{g}_r) . E(\pi_{1,1}, \overrightarrow{\hat{f}_1}) . E\left(\pi_{1,2}, \overrightarrow{\hat{f}_2}\right) . E(\pi_{1,3}, \overrightarrow{\hat{f}_\tau})$$

and

$$\prod_{i=1}^{n} E((1_G, 1_G, M_i), \hat{h}_i)^{-1} = E(\vec{C}_z, \hat{h}_z) . E(\vec{C}_u, \hat{h}_u) . E(\pi_{2,1}, \overrightarrow{\hat{f}_1}) . E\left(\pi_{2,2}, \overrightarrow{\hat{f}_2}\right) . E(\pi_{2,3}, \overrightarrow{\hat{f}_\tau}) .$$

We remark that the above scheme can be simplified by setting $\theta = 0$, in the signing algorithm: since all non-interactive proofs are generated for a perfectly NIWI Groth-Sahai CRS, this modification does not affect the distribution of signatures. In this case, the private key component $\psi(\hat{h}_z)^{\alpha_r}$ is no longer necessary. Such simplification is used in the second embodiment of the invention.

**Claims**

1. Method for ciphering a message by a sender device at destination to a receiver device, said method comprising a step of using a keyed homomorphic encryption function associated with a public key of said receiver device, said step being **characterized in that** it comprises :

   - a step of ciphering said message with an encryption scheme secure against adaptive chosen-ciphertext attacks, in function of a first element of said public key, delivering a ciphertext;
   - a step of determining for said ciphertext, an homomorphic non-interactive proof and a simulation-sound non-interactive proof, said homomorphic non-interactive proof being obtained in function of a set of signatures comprised in said public key, and said simulation-sound non-interactive proof being obtained in function of a second element comprised in said public key, and an evaluation key of said keyed homomorphic encryption function being an element linked to said second element;
   - a step of delivering a cipher of said message comprising said ciphertext, said homomorphic non-interactive proof and said simulation-sound non-interactive proof.

2. Method for ciphering according to claim 1, **characterized in that** said cipher of said message further comprises a one-time verification public key SVK and a one-time signature corresponding to a signature of a concatenation of said ciphertext, said homomorphic non-interactive proof and said simulation-sound non-interactive proof, said signature being verifiable with said verification public key SVK.

3. Method for ciphering according to any claims 1 and 2, **characterized in that** said encryption scheme is based on the Naor-Yung encryption paradigm.

4. Method for ciphering according to claim 1, **characterized in that** said encryption scheme is based on the Cramer-Shoup paradigm.

5. Method for ciphering according to claim 4, **characterized in that** said ciphertext corresponds to an uplet

$$\left(C_0, C_1, C_2, C_3\right) = \left(M \cdot X_1^{\theta_1} \cdot X_2^{\theta_2}, f^{\theta_1}, h^{\theta_2}, g^{\theta_1 + \theta_2}\right)$$ where $M$ is said message and belongs to a group G, encryption exponents $\theta_1, \theta_2$ that belong to group $Z_p$ are private random values, and elements $X_1 = f^{x_1} g^{x_0} \in$ G and $X_2 = h^{x_2} g^{x_0} \in$ G are comprised in said public key, with $(x_0, x_1, x_2) \in Z_p^3$ being unknown elements for said sender device and corresponding to a private key for said receiver device, and *elements g, f, h are elements that belong to said group G.*

6. Method for ciphering according to claim 5, **characterized in that** said step of determining said homomorphic non-interactive proof comprises:

- a step of obtaining said set of signatures which is a signature on independent vectors $\vec{f} = (f,1,g) \in$ G$^3$ and $\vec{h} = (1,h,g) \in$ G$^3$ comprising elements $\left\{\left(a_j, b, c_j\right)\right\}_{j=1}^{2}$ obtained through a use of a private key

$$sk' = \left\{\chi_i, \gamma_i, \delta_i\right\}_{i=1}^{3},$$ with $(\chi_i, \gamma_i, \delta_i) \in Z_p^3$, and $(a_1,b_1,c_1) = (f^{\chi_1}g^{\chi_3}, f^{\gamma_1}g^{\gamma_3}, f^{\delta_1}g^{\delta_3})$, $(a_2,b_2,c_2) = (h^{\chi_2}g^{\chi_3},$ $h^{\gamma_2}g^{\gamma_3}, h^{\delta_2}g^{\delta_3})$, and public key associated to said private key *sk'* being comprised in said public key of said receiver device;
- a step of deriving a linearly homomorphic signature from said set of signatures and said encryption exponents $\theta_1, \theta_2$, delivering a derived signature $(a, b, c) = \left(a_1^{\theta_1} \cdot a_2^{\theta_2}, b = b_1^{\theta_1} \cdot b_2^{\theta_2}, c = c_1^{\theta_1} \cdot c_2^{\theta_2}\right)$ on the vector $(C_1, C_2, C_3)$, said derived signature being said homomorphic non-interactive proof.

7. Method for ciphering according to claim 2 and any claims 4 to 6, **characterized in that** said step of determining said simulation-sound non-interactive proof comprises:

- a step of obtaining said second element corresponding to a one time homomorphic signature on the independent vectors $\vec{f} = (f,1,g) \in \mathbb{G}^3$ and $\vec{h} = (1,h,g) \in \mathbb{G}^3$ generated with a private key, said evaluation key corresponding to said private key;
- a step of determining a derived signature on said second element, said derived signature being a one-time linearly homomorphic signature ;
- a step of generating commitments on said derived signature using a Groth-Sahai common reference string based on said one-time verification public key VK;
- a step of generating proofs with a randomizable linearly homomorphic structure-preserving signing method, said simulation-sound non-interactive proof being a concatenation of said commitments and said proofs.

8. Method for ciphering according to any claims 4 to 6, **characterized in that** said step of determining said simulation-sound non-interactive proof comprises a step of determining a non-interactive witness OR proof in function of said encryption exponents $\theta_1, \theta_2$ and said second element, said second element being a verification key of a digital signature method, and said evaluation key being a corresponding private key of said verification key of said digital signature method.

9. Method for ciphering according to claim 8, **characterized in that** said digital signature method is a Waters signature method.

10. Method for processing a cipher of a message, said method being executed by a receiver device, and said method being **characterized in that** it comprises:

- a step of obtaining a homomorphic non-interactive proof and a simulation-sound non-interactive proof that are associated to said cipher;
- a step of verifying a validity of said homomorphic non-interactive proof and said simulation-sound non-interactive proof , delivering an information of validity of said cipher.

11. Method according to claim 10, **characterized in that** said method further comprises a step of obtaining said message from said cipher in case that said information of validity asserts that said cipher is valid, by using a private key.

12. Method according to claim 10, **characterized in that** when at least a first and a second cipher of a first message and a second message are obtained by said receiver device, the method further comprises a set of combining said first and said second cipher by using an evaluation key, delivering a third cipher comprising an homomorphic non-interactive proof and a simulation-sound non-interactive proof.

13. A computer-readable and non-transient storage medium storing a computer program comprising a set of computer-executable instructions to implement a method for cryptographic computations when the instructions are executed by a computer, wherein the instructions comprise instructions, which when executed, configure the computer to perform a method for ciphering of claims 1 to 9, and/or to perform a method for processing a cipher of claims 10 to 12.

14. Sender device comprising means for ciphering a message, said means comprising means for using a keyed homomorphic encryption function associated with a public key of a receiver device, said means for using being **characterized in that** they comprise:

    - means for ciphering said message with an encryption scheme secure against adaptive chosen-ciphertext attacks, in function of a first element of said public key, delivering a ciphertext;
    - means for determining for said ciphertext, an homomorphic non-interactive proof and a simulation-sound non-interactive proof, said homomorphic non-interactive proof being obtained in function of a set of signatures comprised in said public key, and said simulation-sound non-interactive proof being obtained in function of a second element comprised in said public key, and an evaluation key of said keyed homomorphic encryption function being an element linked to said second element;
    - means for delivering a cipher of said message comprising said ciphertext, said homomorphic non-interactive proof and said simulation-sound non-interactive proof.

15. Receiver device comprising means for processing a cipher of a message, said means being **characterized in that** they comprise:

    - means for obtaining a homomorphic non-interactive proof and a simulation-sound non-interactive proof that are associated to said cipher;
    - means for verifying a validity of said homomorphic non-interactive proof and said simulation-sound non-interactive proof , delivering an information of validity of said cipher.

FIG.1

λ   t   n

201

PK  SK_h  VK  SK_d = (SK_{d,1},..., SK_{d,n})
=
(VK_1,..., VK_n)

M        PK

202

C

PK        C

203

1 or 0

PK   (i, SK_{d,i})   C

204

(i, ⊥)
or
$\mu_{i =} (i, \hat{\mu}_i)$

PK   VK_i   C   μ_i

205

0 or 1

PK   VK   C   $\{\mu_i\}_{i \in S}$

206

M or ⊥

PK   SK_h   $C^{(1)}$   $C^{(2)}$

207

C or ⊥

FIG.2

FIG.3

**EUROPEAN SEARCH REPORT**

Application Number

EP 13 30 6397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | KEITA EMURA ET AL: "Chosen Ciphertext Secure Keyed-Homomorphic Public-Key Encryption", INTERNATIONAL ASSOCIATION FOR CRYPTOLOGIC RESEARCH,, vol. 20130618:085049, 14 June 2013 (2013-06-14), pages 1-18, XP061007838, [retrieved on 2013-06-14] * the whole document * | 1-15 | INV. H04L9/00 |
| A | DAN BONEH ET AL: "Targeted Malleability: Homomorphic Encryption for Restricted Computations", INTERNATIONAL ASSOCIATION FOR CRYPTOLOGIC RESEARCH,, vol. 20120102:174847, 10 June 2011 (2011-06-10), pages 1-28, XP061004954, [retrieved on 2011-06-10] * the whole document * | 1-15 | |

TECHNICAL FIELDS SEARCHED (IPC)

H04L

The present search report has been drawn up for all claims

| Place of search | Date of completion of the search | Examiner |
|---|---|---|
| Munich | 14 March 2014 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. LOFTUS et al.** On CCA-Secure Somewhat Homomorphic Encryption. *the conference SAC,* 2012
- **EMURA et al.** Chosen Ciphertext Secure Keyed-Homomorphic Public-Key Encryption. *the proceedings of the conference PKC,* 2013
- **GERHARD PÖTZELSBERGER.** *KV Web Security: Applications of Homomorphic Encryption*
- **RONALD CRAMER.** *Universal Hash Proofs and a Paradigm for Adaptive Chosen Ciphertext Secure Public-Key Encryption*
- **AMIT SAHAI.** Non-Malleable Non-Interactive Zero Knowledge and Adaptive Chosen-Ciphertext Security. *the proceedings of the conference FOCS'99*
- **D. BONEH et al.** Short Group Signatures. *the proceedings of the conference CRYPTO,* 2004
- **J. GROTH.** Simulation-Sound NIZK Proofs for a Practical Language and Constant Size Group Signatures. *the proceedings of the conference Asiacrypt'06,* 2006
- **B. WATERS.** Efficient Identity-Based Encryption Without Random Oracles. *the proceedings of the conference Eurocrypt,* 2005
- **J. GROTH et al.** Efficient Non-interactive Proof Systems for Bilinear Groups. *the proceedings of the conferenceEurocrypt'08*
- **B. LIBERT et al.** Linearly Homomorphic Structure-Preserving Signatures and their Applications. *the proceedings of the conference Crypto,* 2013
- **JENS GROTH.** Simulation-Sound NIZK Proofs for a Practical Language and Constant Size Group Signatures. *Asiacrypt'06,* 2006, 444-459
- **GROTH.** Simulation-sound NIZK proofs for a practical language and constant size group signatures. *the proceedings of the conference Asiacrypt,* 2006
- **M. NAOR et al.** Public-key Cryptosystems Provably Secure against Chosen Ciphertext Attacks. *the proceedings of the conference STOC,* 1990
- Non-Malleable Non-Interactive Zero Knowledge and Adaptive Chosen-Ciphertext Security. *the proceedings of the conference FOCS,* 1999
- **B. LIBERT.** Non-Interactive CCA2-Secure Threshold Cryptosystems with Adaptive Security: New Framework and Constructions. *the proceedings of the conference, TCC,* 2012